(19) **Europäisches Patentamt**
**European Patent Office**
**Office européen des brevets**

(11) **EP 2 611 093 B1**

(12) **EUROPEAN PATENT SPECIFICATION**

(45) Date of publication and mention
of the grant of the patent:
**28.11.2018 Bulletin 2018/48**

(51) Int Cl.:
***H04L 12/833*** (2013.01)   ***H04W 28/06*** (2009.01)

(21) Application number: **11010049.2**

(22) Date of filing: **21.12.2011**

(54) **Technique for handling memory resources of a memory buffer**

Technik zur Handhabung von Speicherressourcen eines Speicherpuffers

Technique de gestion des ressources de mémoire d'une mémoire-tampon

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.07.2013 Bulletin 2013/27**

(73) Proprietor: **Telefonaktiebolaget LM Ericsson
(publ)
164 83 Stockholm (SE)**

(72) Inventor: **Leicht, Hans Jürgen
91364 Unterleitner (DE)**

(74) Representative: **Röthinger, Rainer
Wuesthoff & Wuesthoff
Patentanwälte PartG mbB
Schweigerstrasse 2
81541 München (DE)**

(56) References cited:
**EP-A2- 0 272 834   EP-A2- 1 892 922
US-B1- 7 860 120**

**Description**

**Technical Field**

The present disclosure generally relates to the handling of memory resources. In particular, the present disclosure relates to a method for handling memory resources of a memory buffer, to a memory device comprising the memory buffer, and to a receiver comprising the memory device.

**Background**

For a transfer of Transmission Control Protocol/Internet Protocol (TCP/IP) data packets and other data from a radio sender to a radio receiver, the data are usually encapsulated within data structures called PDUs (Protocol Data Units). At the radio receiver, the encapsulated data are retrieved again from the PDUs. In the case of RLC (Radio Link Control) PDUs, a part of the transferred data is control data based which the radio receiver can determine whether user data encapsulated within the PDUs have been lost during transmission.

The radio receiver has to fulfil certain requirements (depending on the radio receiver category) to properly handle the received PDUs. For example, it is defined in Table 4.1-1 of Long Term Evolution (LTE) specification 3GPP TS 36.306 that the radio receiver has to be able to receive and store a maximum amount of data encapsulated within the PDUs during a TTI (Time Transmission Interval). In TS36.306, the maximum amount of data is referred to as "Maximum number of bits of a DL-SCH (Downlink Shared Channel) transport block received within a TTI (Time Transmission Interval)". This requirement implies that, in the case of RLC PDUs, the maximum size of the transport block is also the maximum size of a RLC PDU (assuming that only one single RLC PDU is transmitted within one TTI).

To be able to carry out RLC PDU reordering and RLC PDU retransmission without having the need to discard newly received RLC PDUs during the RLC PDU reordering and RLC PDU retransmission processes, the memory buffer of the radio receiver has to be sized such that it is capable of buffering a plurality of subsequently received RLC PDUs of the maximum size. Due to real time requirements, the memory buffer may be a non-cached memory buffer which is pre-allocated (e.g., during stack activation), because allocation via the mobile platform (i.e., via the radio receiver) on demand via platform calls might violate timing constraints. However, when carrying out the pre-allocation process (e.g., at the time of stack activation), the required RLC PDU sizes are usually not known since they typically vary (e.g., depending on the amount of TCP/IP data packets to be transmitted within one TTI). Thus, to be on the safe side, the memory buffer pre-allocation process allocates for each RLC PDU a memory portion having the maximum possible RLC PDU size. This pre-allocation, however, results in a waste of memory resources since RLC PDUs normally have sizes much smaller than the maximum possible RLC PDU data size.

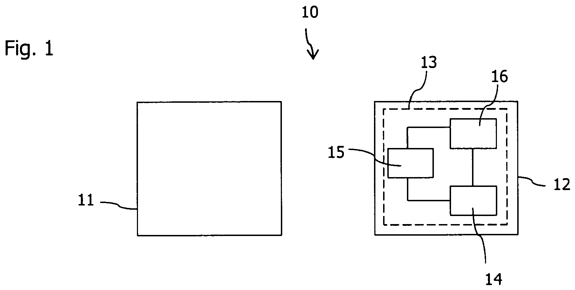

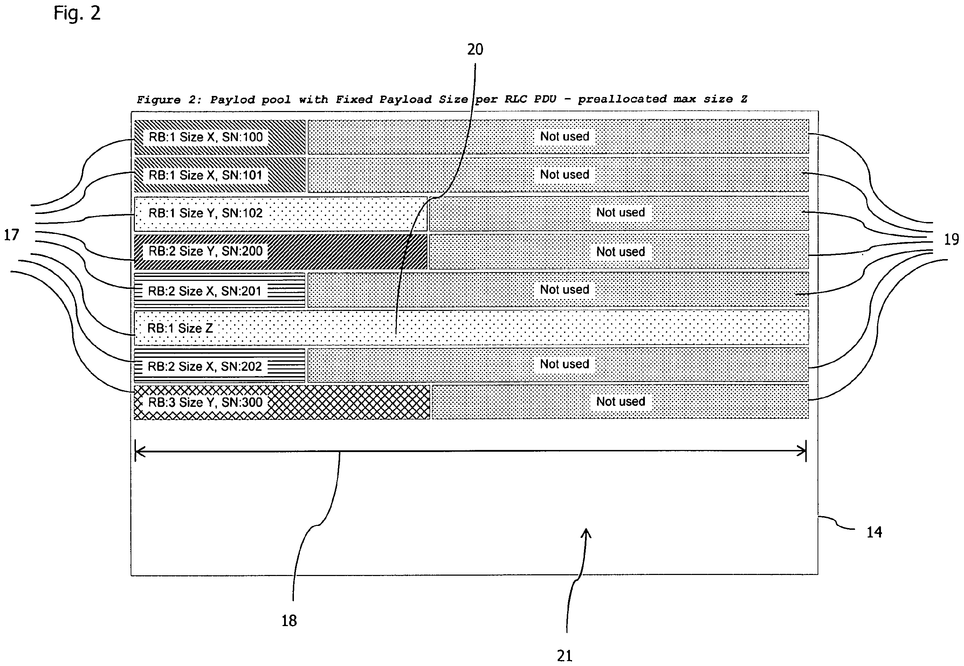

The resulting waste of memory will now be illustrated in more detail with reference to Figs. 1 and 2. Fig. 1 shows a radio system 10 comprising a radio transmitter 11 and a radio receiver 12. The radio receiver 12 comprises a memory device 13. The memory device 13 in turn comprises a memory buffer 14, a receiving unit 15 connected to the memory buffer 14 and configured to receive data units and a controlling unit 16 connected to the memory buffer 14 and the receiving unit 15 and configured to control processes of storing and retrieving data units to/from the memory buffer 14. The data units received at the receiving unit 15 are data units which have been transmitted from the radio transmitter 11 to the radio receiver 12.

Assuming that the data units received at the receiving unit 15 are RLC PDUs, the RLC PDUs are usually stored in the memory buffer 14 as illustrated in Fig. 2. Fig. 2 schematically shows a memory area 21 of the memory buffer 14 (the memory area 21 may represent the whole memory buffer 14 or only a part of the memory buffer 14). The memory area 21 is successively filled with RLC PDUs 17 in the same order as the RLC PDUs are received by the receiving unit 15. Since it is not known in advance how large the sizes of the RLC PDUs 17 are, for each RLC PDU 17 the maximally necessary data portion is allocated within the memory area 21, as indicated by arrow 18. However, since in most cases the sizes of the RLC PDUs 17 are smaller than the maximally necessary data portion 18, substantial portions 19 of the allocated data portions 18 are wasted. Only in the case of RLC PDUs which have the maximum data size (in this example only RLC PDU 20), no waste of memory resources occurs.

As a consequence, existing allocation solutions either accept to pre-allocate unnecessarily large memory resources to be able to buffer sufficient RLC PDUs of multiple Radio Bearers (RB) (which is expensive), or, especially in case of poor radio conditions (when many RLC retransmissions happen), there is the risk to run out of buffer memory much before RLC windows of radio bearers are full.

Document EP 1 892 922 A2 may be construed to disclose a radio receiving apparatus for receiving variable-length length RLC PDU data in an RLC layer that includes a buffer memory sectioned into a plurality of areas having predetermined maximum data length of the RLC PDU data. By referring to a sequence number SN included in each received RLC PDU data, the radio receiving apparatus stores the RLC PDU data having an identical sequence number SN into an identical area, and assembles an RLC SDU data on a basis of the RLC PDU data stored in each area. When the RLC PDU data in the RLC layer is modified to have a variable length, a buffer memory for storing the RLC PDU data received in the radio receiving apparatus can be used efficiently without capacity being wasted.

Document EP 0 272 384 A2 may by construed to disclose a processor of a multiprocessor system communicating across bus via a low-latency packet protocol featuring per-logical channel input queues and output queues, different per-processor priorities for sending data packets and data acknowledging "quick" messages, and separate buffers for receiving data packets and "quick" messages, respectively. Transmitted data packets afflicted by error, receive buffer overflow, and input queue-full conditions are discarded by the receiving processor and are retransmitted by the sending processor.

**Summary**

A need arises for a memory resource handling which saves memory resources, however at the same time guarantees that there is no risk to run out of buffer memory.

According to the invention, there are provided a method, an apparatus, and a system according to the independent claims. Developments are set forth in the dependent claims.

Preferably, a method of handling memory resources of a memory buffer of a receiver is provided, the method comprising receiving first data units of varying size at the receiver, the first data units comprising a user data section including user data, converting the first data units into second data units, wherein the second data units respectively comprise a user data section including the user data of the corresponding first data units and a header section including management data, and storing the second data units in the memory buffer such that a start address of a second data unit is linked, in accordance with the management data, to an end address of a further second data unit stored in the memory buffer which precedes the second data unit.

Preferably, a concatenation of second data units is generated in the memory buffer. The concatenation may be performed such that there are no "gaps" (i.e., memory areas which are neither filled with user data nor with header data) between two succeeding second data units. In other words, the second data units may be stored in the memory buffer such that a start address of a second data unit is linked, in accordance with the management data, to an end address of a further second data unit which is stored immediately before the second data unit in the memory buffer. Alternatively, a short memory section (e.g., a dummy or a content section) may be inserted between two succeeding second data units.

The receiver may be a radio receiver. Moreover, the first data units may be radio transmission protocol data units, such as RLC PDUs.

In case that storing a second data unit would result in a situation where an end address of the second data unit would exceed a memory buffer end address, the second data unit may be stored such in the memory buffer that the start address of the second data unit coincides with or is larger than a memory buffer start address.

In this way, the use of memory resources of the memory buffer can be further optimized (e.g., in the form of a ring buffer architecture).

The memory buffer may be a coherent (e.g., non split-up) memory area which may for example be provided in a memory chip. In such a case, the memory buffer start address may correspond to a start address of the coherent memory area, and the memory buffer end address may correspond to an end address of the coherent memory area.

The first data units may respectively comprise a header section comprising control information used for controlling the transfer of the first data units from a radio transmitter to a radio receiver. The conversion of the first data units into second data units may be carried out such that the second data units do no longer include the control information.

As soon as a start address has been allocated for a second data unit in the memory buffer, a value of a memory pointer pointing to the start address of the second data unit may be passed to an application which processes data of the second data unit. The memory pointer value may indicate to an application at which position within the memory buffer the second data unit is stored.

As soon as an application has terminated processing data of a second data unit stored in the memory buffer, a variable (e.g., comprised by the management data of the header section of the second data unit) may be set to a value indicating that the second data unit can be overwritten. In other words, second data units within the memory buffer which are no longer needed by applications may be correspondingly marked, so that they can be overwritten if necessary.

A second data unit may only be stored within the memory buffer if the second data unit can be stored as a continuous data unit in the memory buffer. That is, the second data unit may not be stored in the memory buffer as long there is not enough memory to store it without splitting it into two or more parts (which might require additional buffer management efforts).

One or more of the following variables may be used (e.g., also as the management data) for allocating and de-allocating memory resources of the memory buffer for a second data unit: a pointer MemBegin indicating a start address of the memory buffer, a variable MemSize indicating a size of the memory buffer, a pointer LastAlloc indicating a memory start address of the second data unit stored last, a pointer NextToAlloc indicating an end address of the second data unit stored last, and a pointer NextToFree indicating a start address of an oldest still stored second data unit. In this way, a transparent and efficient way to manage the second data units in the memory buffer becomes possible. In the following, more detailed examples will be given how the above pointers may be used.

The second data units may respectively comprise a header section comprising at least one of a pointer Next pointing to the end address of the second data unit, and a variable Freed indicating whether the second data unit is allowed to be overwritten or not. In order to determine whether storing the second data unit would result in a situation where the memory end address of the second data unit would exceed the memory end address of the memory buffer, it may be determined whether a sum of the values of pointers MemBegin and MemSize is equal to or larger than a sum of the values of pointer NextToAlloc and a size of the header section of the second data unit and a size of the user data section of the second data unit.

If it is determined that storing a second data unit would result in a situation where the end address of the second data unit would exceed the memory end address of the memory buffer, the following process may be carried out: determining whether a relation: [a difference between the values of pointers NextToFree and MemBegin is equal to or larger than a sum of the size of the header section of the second data unit and the size of the user data section of the second data unit] is fulfilled. Only if the relation is fulfilled, the second data unit may be stored in the memory buffer such that the start address of the second data unit coincides with or is larger than a start address of the memory buffer.

Memory resources of the memory buffer allocated by stored second data units may be de-allocated using the following processes: 1) determining if a) the value of pointer NextToFree is not equal to the value of pointer NextToAlloc, and if b) a second data unit, the start address of which corresponds to the value of pointer NextToFree, stores in its header a value for the variable Freed indicating that the second data unit can be deleted; 2) in case that both relations a) and b) are fulfilled, setting the value of pointer NextToFree to a value of pointer Next of the header section of the second data unit; and 3) repeating processes 1) and 2) until at least one of the relations a) and b) is not fulfilled.

The values of the variables MemBegin and MemSize may be set only once during an initialization of the memory buffer. Alternatively, the variable values may be set or re-set after the initialization phase.

The first data units received by the radio receiver may be Downlink Radio Link Control (DL RLC) data units.

Preferably, a computer program product comprising program code portions for carrying out any method described herein is provided when the computer program product is executed on one or more computing devices. A computer readable recording medium storing the computer program product according is also provided.

Preferably, a memory device for a receiver is provided, the memory device comprising a memory buffer, a receiving unit connected to the memory buffer and configured to receive first data units of varying size at the receiver which respectively comprise a user data section including user data, and a controlling unit connected to the memory buffer and the receiving unit and configured to control a conversion process which converts the first data units into second data units, wherein the second data units respectively comprise a user data section including the user data of the corresponding first data units, and a header section including management data, and a storing process which stores the second data units in the memory buffer such that a start address of a second data unit is linked, in accordance with the management data, to an end address of a further second data unit stored in the memory buffer which precedes the second data unit.

The controlling unit may be further configured to control, in case that storing a second data unit would result in a situation where an end address of the second data unit would exceed a memory buffer end address, storing of the second data unit in the memory buffer such that the start address of the second data unit coincides with or is larger than a memory buffer start address.

Preferably, a radio receiver comprising a memory device as presented herein is provided. The first data units received by the radio receiver may for example be DL RLC data units sent from a radio transmitter. Both the radio receiver and the radio transmitter may conform to the LTE specifications.

## Brief Description of the Drawings

In the following, the present disclosure will be described in more detail with reference to exemplary embodiments illustrated in the drawings, wherein

Fig. 1    is a schematic block diagram illustrating a radio system comprising a radio transmitter and a radio receiver;

Fig. 2    is a schematic drawing illustrating a memory management strategy of a memory buffer used in the radio system as shown in Fig. 1;

Fig. 3    is a schematic block diagram illustrating a memory device according to an embodiment of the present invention;

Fig. 4    is a flow chart illustrating a method of handling memory resources of a memory device according to an embodiment of the present invention;

Fig. 5 is a schematic drawing illustrating a memory management strategy in a memory buffer according to an embodiment of the present invention; and

Fig. 6 is a schematic drawing illustrating a memory management strategy in a memory buffer according to an embodiment of the present invention.

## Detailed Description

In the following description, for purposes of explanation and not limitation, specific details are set forth, such as specific device and system configurations and specific methods, steps and functions, in order to provide a thorough understanding of the technique presented herein. It will be appreciated that this technique may be practiced in other embodiments that depart from these specific details.

Those skilled in the art will further appreciate that the methods, steps and functions described herein may be implemented using individual hardware circuitry, using software functioning in conjunction with a programmed microprocessor or general purpose computer, using one or more Application Specific Integrated Circuits (ASICs), one or more DSPs and/or one or more Field Programmable Gate Arrays (FPGAs). It will also be appreciated that the technique disclosed herein may be embodied in a processor and a memory coupled to the processor, wherein the memory stores one or more programs that perform the methods, steps and functions described herein when executed by the processor.

With respect to the following embodiments, the same reference numerals are used to denote the same or similar components.

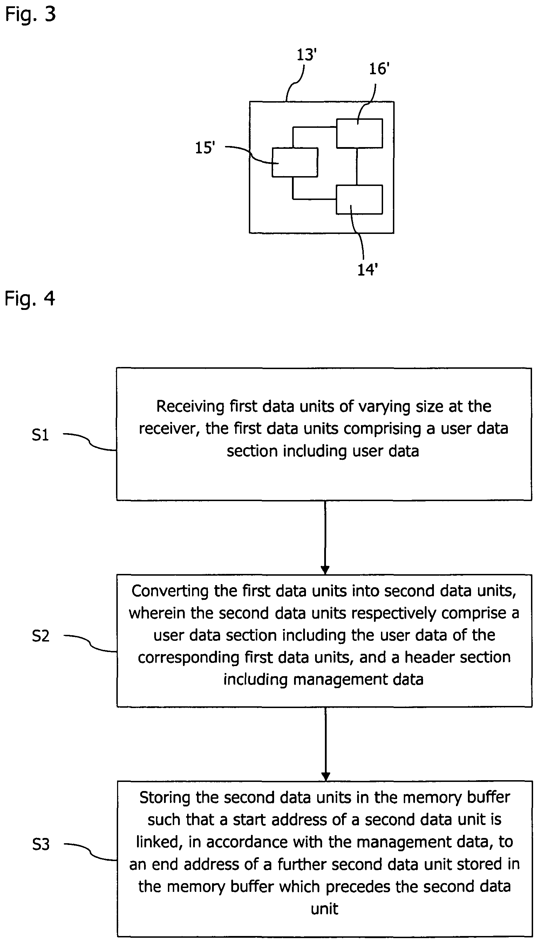

Fig. 3 shows an embodiment of a memory device 13' for a receiver 12'. The memory device 13' comprises a memory buffer 14', a receiving unit 15' connected to the memory buffer 14' and configured to receive data units and a controlling unit 16' (which includes a memory handler) connected to the memory buffer 14 and the receiving unit 15' and configured to control storage and retrieval of data units into/from the memory buffer 14'. The memory buffer 14' may be realized as a coherent (i.e., consecutive) memory area in a memory chip. Moreover, the memory area may be associated with a start address ("memory buffer start address") as well as an end address ("memory buffer end address").

The receiver 12' may be a radio receiver. In this case, the first data units may be radio transmission protocol data units (e.g., Downlink Radio Link Control (DL RLC) data units). In one example, the receiver 12' may be part of an LTE User Equipment (UE), such as a mobile telephone, smartphone or network card.

Fig. 4 shows a generic method embodiment illustrating the handling of memory resources of the memory buffer 14' shown in Fig. 3.

At step S1, first data units of varying size are received at the receiving unit 15'. The first data units comprise a user data section including user data. At step S2, the first data units are converted into second data units, wherein the second data units respectively comprise a user data section including the user data of the corresponding first data units, and a header section including management data. Then at step S3, the second data units are stored in the memory buffer 14' such that a start address of a second data unit is linked, in accordance with the management data, to an end address of a further second data unit stored in the memory buffer 14' which precedes the second data unit. Steps S1 to S3 are controlled by the controlling unit 16'.

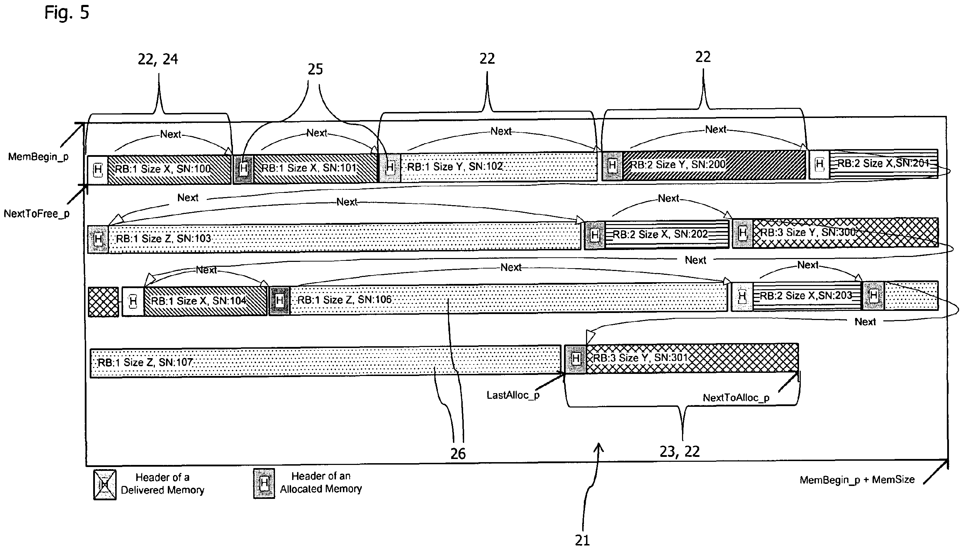

In the following description, with reference to Fig. 5, another method embodiment for handling memory resources of the memory buffer 14' shown in Fig. 3 will be described in more detail.

In this embodiment, the following variables are used for allocating and de-allocating memory resources for second data units 22 in a coherent memory area 21 of the memory buffer 14': a pointer MemBegin indicating a start address of the memory area 21 of the memory buffer 14, a variable MemSize indicating a size of the memory area 21 of the memory buffer 14 (i.e., the pointer MemBegin + MemSize indicates the memory end address of the memory area 21 of the memory buffer 14), a pointer LastAlloc indicating a start address of the second data unit 23 stored last, a pointer NextToAlloc indicating an end address of the second data unit 23 stored last, and a pointer NextToFree indicating a start address of an oldest still stored second data unit 24.

As illustrated in Fig. 5, second data units 22 respectively comprise a header section 25 with management data. The management data comprise a pointer Next (indicated by the arrows "Next" in Fig. 5) pointing to the end address of the respective second data unit 22, and a variable Freed indicating whether the second data unit 22 is allowed to be overwritten in the memory area 21 of the memory buffer 14' or not. In this embodiment, since the end address of a second data unit 22 corresponds to a start address of a further second unit 22 which is immediately stored after the second data unit 22, the pointer Next can also be interpreted as pointer pointing to the start address of an immediately following (i.e., "the next") second unit 22. The second data units 22 further each comprise a user data section 26.

In order to determine whether storing a second data unit 22 would result in a situation where the memory end address of the second data unit 22 would exceed the memory end address of the memory area 21 of the memory buffer 14', it may be determined by the memory handler of the controlling unit 16' whether a sum of the values of pointers MemBegin and MemSize is equal to or larger than a sum of the values of pointer NextToAlloc and a size of the header section 25 of the second data unit 22 and a size of a user data section 26 of the second data unit 22. If it is determined that storing a second data unit 22 would result in a situation where the end address of the second data unit 22 would exceed the memory end address of the memory area 21 of the memory buffer 14', it can be concluded that the remaining space within the memory area 21 is not large enough to store the second data unit 22. This means that the second data unit 22 can only be stored at the beginning of the memory area 21 in cases in which it is desired to store the second data unit 22 as a single coherent data unit.

In this regard it may be checked whether the beginning portion of the memory area 21 can be overwritten. This can be done based on the use of the above-described pointers as follows. In a first step, it is determined by the memory handler of the controlling unit 16' whether a relation: [difference between the values of pointers NextToFree and MemBegin is equal to or larger than a sum of the size of the header section 25 of the second data unit 22 and the size of the user data section 26 of the second data unit 22] is fulfilled. Then, only if the relation is fulfilled, the second data unit 22 is stored in a second step in the memory area 21 of the memory buffer 14' such that the start address of the second data unit 22 coincides with or is larger than a start address of the memory area 21 of the memory buffer 14'.

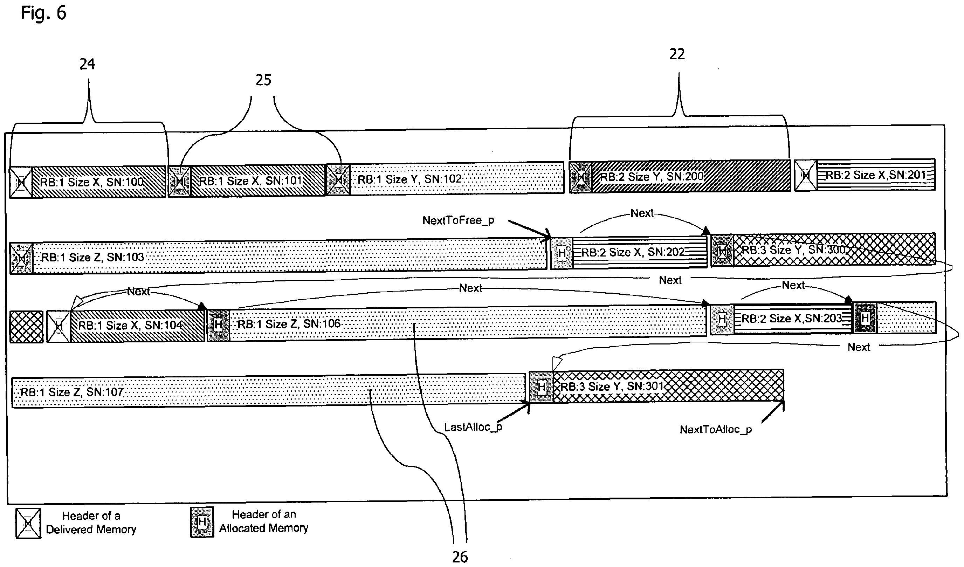

Fig. 6 shows that memory resources of the memory area 21 of the memory buffer 14' allocated by stored second data units 22 can be de-allocated. De-allocation comprises the following process carried out by the memory handler of the controlling unit 16':

1) determining if a) the value of pointer NextToFree is not equal to the value of pointer NextToAlloc, and if b) a second data unit 22, the start address of which corresponds to the value of pointer NextToFree, stores in its header 25 a value for the variable Freed indicating that the second data unit 22 can be deleted;

2) in case that both relations a) and b) are fulfilled, setting the value of pointer NextToFree to a value of pointer Next of the header section 25 of the second data unit 22; and

3) repeating processes 1) and 2) until at least one of the relations a) and b) is not fulfilled.

If the above process is carried out regularly, then the value of the pointer NextToFree always correctly reflects the current end of the memory portion of the memory area 21, which can be filled again with new second data units 22. In Fig. 6, the value for the variable Freed indicating that the second data unit 22 can be deleted is indicated by a crossed header section 25.

The values of the variables MemBegin and MemSize may be set only once during an initialization of the memory area 21 of the memory buffer 14. Of course, the corresponding values could also be set (or re-set) after the initialization phase.

In Figs. 5, and 6, an embodiment has been shown in which the memory area 21 is a coherent memory area. However, other embodiments may also be applied in cases which the memory area 21 is split into two or more memory portions. In such cases, each transition between two portions may be handled in the same way as the transition between the end and the start of the coherent memory area 21.

As soon as a start address has been allocated for a second data unit 22 in the memory area 21 of the memory buffer 14', a value of a memory pointer pointing to the start address of the second data unit 22 may be passed to an application which processes data of the second data unit 22 using the memory pointer. When the application has terminated processing data of a second data unit 22 stored in the memory area 21 of the memory buffer 14', the variable Freed being (part of the management data of the header section 25 of the second data unit 22) can be set to a value indicating that the second data unit 22 can be overwritten.

In certain implementations (e.g., for LTE) of the technique presented herein, a single coherent memory area may be used from which RLC PDUs of all radio bearers are served. This area may be pre-allocated by the mobile platform during communication stack activation. When performing the technique presented herein, every RLC PDU consumes only the amount of memory which is actually needed, and no memory resources are wasted.

In one RLC-specific example, during stack activation, a RLC payload memory handler of the controlling unit 16' allocates one single coherent and non-cached memory area 21, which may be designed as a ring buffer. During regular radio operation, on reception of DL RLC PDUs at radio receiver, applications (e.g., the radio bearers) may request from the memory handler memory resources according to the actual (dynamic) size of the PDU payload portion (user data) of the DL RLC PDUs. The memory handler determines the next free memory portion, links it to a previously allocated memory portion and returns a corresponding pointer to the application.

In addition to the PDU payload portion, every second data unit 22 may have a small header used for memory queue handling (linked list). The size of a second data unit 22 may for example be 8 byte (5 byte used) needed by the header plus the size of the requested payload. A corresponding header structure PayloadHead_t may look as follows:

Structure PayloadHead t:

```
uint8 *    Next_p;
bool       Delivered;
uint8      Spare[3]; // optional; for future use - may be needed for 32bit alignment
```

Assuming that the memory handler of the controlling unit 16' maintains a pointer pointing to the beginning of the memory area (MemBegin_p), the memory area size (MemSize) and further pointers pointing to the oldest allocated memory location (NextToFree_p), the last allocated memory location (LastAlloc_p), and the next free memory location (NextToAlloc_p), the pointer elements may be defined as follows:

Elements of RLC MemoryHandler:

```
uint8 * MemBegin_p;
uint32 MemSize;
uint8 * NextToAlloc_p;
uint8 * NextToFree_p;
uint8 * LastAlloc_p;
```

In the following description, an example will be given how the above described pointer elements of the memory handler of the controlling unit 16' can be used.
In order to initialize the memory area 21 of the memory buffer 14', MemBegin_p and MemSize may be set only during stack activation. NextToAlloc_p, NextToFree_p and LastAlloc_p may be initialized to point to the beginning of the memory area 21, i.e. may be set equal to MemBegin_p.
During, for example, LTE operation, upon reception of a DL RLC PDU at the radio receiver 12', the radio bearer may request memory from the RLC memory handler according to the DL RLC PDU size as indicated by the Medium Access Control (MAC) layer and call the following function using the payload size (size of user data 26) as parameter of the function:

$$uint8 * Mem\_p = RLC\_MemAlloc(uint32\ PayloadSize)$$

In response thereto, the RLC memory handler considers the next free memory portion of the memory area 21 (NextToAlloc_p) for allocation if enough free memory is available, i.e., if:

1) MemBegin_p + MemSize >= NextToAlloc_p + sizeof(PayloadHead_t) + PayloadSize
or, in case of RLC memory area wrap around, i.e., when 1) is not fulfilled:

2) NextToFree_p - MemBegin_p >= sizeof(PayloadHead_t) + PayloadSize

In the latter case, NextToAlloc_p is set to point to the beginning of the RLC memory area 21:

$$NextToAlloc\_p = MemBegin\_p$$

When enough free memory is available, the newly allocated memory portion is reflected by NextToAlloc_p and is linked to the previously allocated memory portion reflected by LastAlloc_p via pointer Next_p assigned to the previously allocated memory portion:

$$Mem\_p = NextToAlloc\_p$$

$$LastAlloc\_p\text{->}Next\_p = Mem\_p$$

Then, LastAlloc_p is updated to point to the newly allocated memory portion, and NextToAlloc_p is updated to point to the next free memory portion which can be allocated next:

$$LastAlloc\_p = Mem\_p$$

$$NextToAlloc\_p = Mem\_p + sizeof(PayloadHead\_t) + PayloadSize$$

The payload header (header section 25) of the newly allocated memory portion is initialized and the pointer pointing to the newly allocated memory portion (Mem_p) is returned:

$$LastAlloc\_p\text{->}Freed = FALSE$$

$$return\ Mem\_p$$

The DL RLC PDU payload (user data section 26) can be written right after the payload header (header section 25). If the RLC memory area 21 is completely in use (i.e., if there is no free memory portion which could be allocated), an invalid (NULL) pointer Mem_p is returned.

In order to de-allocate a memory portion allocated for the second data units 22 in the memory area 21, for example, after all SDUs (Service Data Units) within a DL RLC PDU could be delivered to higher layers, the memory handler may call the following function:

$$void\ RLC\_MemFree(uint8 * Mem\_p);$$

Calling this function causes the memory handler to mark the memory portion to which the pointer Mem_p points as freed (allowed to be overwritten):

$$Mem\_p\text{->}Freed = FALSE$$

The RLC memory handler of the controlling unit 16' frees all second data units 22 which are marked as Freed between NextToFree_p and NextToAlloc_p, but stops to free memory when a second data unit 22 of the memory area 21 is not marked as Freed:

$$while\ NextToFree\_p\ != NextToAlloc\_p\ AND\ NextToFree\_p\text{->}Freed == TRUE$$

$$NextToFree\_p = NextToFree\_p\text{->}Next$$

As has become apparent in the foregoing description, the embodiments provide a plurality advantages for DL RLC PDU payload and similar data. For example, the memory handling for DL RLC PDU payload allows efficient memory resource usage. No memory resources are wasted for DL RLC PDUs which are smaller than the maximum possible DL RLC PDU size, and the complete memory area can be efficiently used, independently of dynamically changing DL RLC PDU sizes.

Since the memory handling may be based on a linked list, it has only very little overhead, and it allows fast allocation and de-allocation without any performance critical search algorithm. The size of the payload header (header section of second data unit) is also very small and can often be neglected. Compared to existing solutions, the memory handling presented herein allows receiver operation with smaller memory needs. This is valid for both low cost and for highly sophisticated products.

As further benefit, the memory handling is flexible with respect to the actual supported maximum DL RLC PDU payload size. Even for different products supporting different 3GPP LTE UE categories, no change of the RLC memory handler is needed.

While the technique presented herein has been described in relation to exemplary embodiments, it is to be understood that this description is for illustrative purposes only. Accordingly, it is intended that the invention be limited only by the scope of the claims appended hereto.

**Claims**

1. A method of handling memory resources of a memory buffer (14') of a receiver (12'), the method comprising:

   - receiving (S1) first data units of varying size at the receiver (12'), the first data units comprising a user data section including user data;
   - converting (S2) the first data units into second data units, wherein the second data units (22, 24) respectively comprise a user data section including the user data of the corresponding first data units, and a header section (25) including management data comprising a memory pointer pointing to the end address of a respective second data unit;
   - storing (S3) the second data units in the memory buffer (14') such that:

      -- a start address of the respective second data unit is linked, in accordance with the management data, to a start address of a further second data unit stored in the memory buffer (14') which immediately follows the respective second data unit, and
      -- the memory pointer of the respective second data unit (22, 24) is interpretable as pointer pointing to the start address of the immediately following second data unit (25), since the end address of the respective second data unit (22, 24) corresponds to a start address of the further second data unit (25) which is immediately stored after the respective second data unit.

2. The method of claim 1, wherein the receiver is a radio receiver (12'), and wherein the first data units are radio transmission protocol data units.

3. The method of claim 1 or 2, wherein, in case that storing a second data unit would result in a situation where an end address of the second data unit would exceed a memory buffer end address, the second data unit is stored such in the memory buffer that the start address of the second data unit coincides with or is larger than a memory buffer start address.

4. The method of claim 3, wherein the memory buffer (14') comprises a coherent memory area, and wherein the memory buffer start address corresponds to the start address of the coherent memory area (21), and the memory buffer end address corresponds to the end address of the coherent memory area (21).

5. The method according to any one of claims 1 to 4,
   wherein the first data units respectively comprise a header section comprising control information used for controlling the transfer of the first data units from a transmitter to the receiver (12'), wherein the conversion of the first data units into second data units is carried out such that the second data units do not include the control information.

6. The method according to any one of claims 1 to 5,
   further comprising passing, as soon as a start address has been allocated for a second data unit in the memory buffer (14'), a value of the memory pointer pointing to the start address of the second data unit to an application which processes data of the second data unit.

7. The method according to any one of claims 1 to 6,
   further comprising setting, as soon as an application has terminated processing data of a second data unit stored in the memory buffer (14'), a variable being part of the management data of the header section of the second data unit to a value indicating that the second data unit can be overwritten.

8. The method according to any one of claims 1 to 7,
   wherein a second data unit is only stored within the memory buffer (14') if the second data unit can be stored as a continuous data unit in the memory buffer (14').

**9.** The method according to any one of claims 1 to 8,
wherein one or more of the following variables are used for allocating and de-allocating memory resources of the memory buffer (14') for a second data unit: a pointer MemBegin indicating a start address of the memory buffer, a variable MemSize indicating a size of the memory buffer, a pointer LastAlloc indicating a memory start address of the second data unit stored last, a pointer NextToAlloc indicating an end address of the second data unit stored last, and a pointer NextToFree indicating a start address of an oldest still stored second data unit.

**10.** The method according to any one of claims 1 to 9,
wherein the second data units respectively comprise a variable Freed indicating whether the second data unit can be overwritten in the memory buffer (14') or not.

**11.** The method according to any one of claims 9 and 10,
wherein, in order to determine whether storing the second data unit would result in a situation where the memory end address of the second data unit would exceed the memory end address of the memory buffer (14'), it is determined whether a sum of the values of pointers MemBegin and MemSize is equal to or larger than a sum of the values of pointer NextToAlloc and a size of the header section of the second data unit and a size of the user data section of the second data unit.

**12.** The method according to any one of claims 9 to 11,
wherein, if it is determined that storing a second data unit would result in a situation where the end address of the second data unit would exceed the memory end address of the memory buffer (14'), the following processes are carried out:

- determining whether a relation: a difference between the values of pointers NextToFree and MemBegin is equal to or larger than a sum of the size of the header section of the second data unit and the size of the user data section of the second data unit is fulfilled,
- only if the relation is fulfilled, storing the second data unit in the memory buffer such that the memory start address of the second data unit coincides with or is larger than a start address of the memory buffer (14').

**13.** The method according to any one of claims 9 to 12,
wherein memory resources of the memory buffer (14') allocated by stored second data units are de-allocated using the following processes:

1) determining if a) the value of pointer NextToFree is not equal to the value of pointer NextToAlloc, and if b) a second data unit, the start address of which corresponds to the value of pointer NextToFree, stores in its header a value for the variable Freed indicating that the second data unit can be deleted;
2) in case that both relations a) and b) are fulfilled, setting the value of pointer NextToFree to a value of the memory pointer (Next) of the header section of the second data unit; and
3) repeating processes 1) and 2) until at least one of the relations a) and b) is not fulfilled.

**14.** The method according to any one of claims 9 to 13,
wherein the values of the variables MemBegin and MemSize are set only once during an initialization of the memory buffer (14').

**15.** The method according to any one of claims 1 to 14,
wherein the first data units received by the radio receiver are Downlink Radio Link Control data units.

**16.** A computer program product comprising program code portions which for carrying out any component or method step as described in claims 1 to 15 when the computer program product is executed on one or more computing devices.

**17.** A computer readable recording medium storing a computer program product according to claim 16.

**18.** A memory device (13') for a receiver (12'), comprising:

- a memory buffer (14');
- a receiving unit (15') connected to the memory buffer (14') and configured to receive first data units of varying size at the receiver, the first data units respectively comprising a user data section including user data;

- a controlling unit (16') connected to the memory buffer (14') and the receiving unit (15') and configured to control:

-- a conversion process which converts the first data units into second data units (22, 24), wherein the second data units respectively comprise a user data section including the user data of the corresponding first data units, and a header section (25) including management data comprising a memory pointer pointing to the end address of a respective second data unit, and
-- a storing process configured to store the second data units in the memory buffer (14') such that:

--- a start address of the respective second data unit is linked, in accordance with the management data, to a start address of a further second data unit stored in the memory buffer (14') which immediately follows the respective second data unit, and
--- the memory pointer of the respective second data unit (22, 24) is interpretable as pointer pointing to the start address of the immediately following second data unit (25), since the end address of the respective second data unit (22, 24) corresponds to a start address of the further second data unit (25) which is immediately stored after the respective second data unit.

19. A radio receiver (12') comprising a memory device (13') according to claim 18.


**Patentansprüche**

1. Verfahren zum Verwalten von Speicherressourcen eines Speicherpuffers (14') eines Empfängers (12'), wobei das Verfahren umfasst:

- Empfangen (S1) von ersten Dateneinheiten variierender Größe an dem Empfänger (12'), wobei die ersten Dateneinheiten einen Benutzerdatenabschnitt umfassen, der Benutzerdaten enthält;
- Umwandeln (S2) der ersten Dateneinheiten in zweite Dateneinheiten, wobei die zweiten Dateneinheiten (22, 24) jeweils einen Benutzerdatenabschnitt, der die Benutzerdaten der entsprechenden ersten Dateneinheiten enthält, und einen Header-Abschnitt (25) umfassen, der Verwaltungsdaten enthält, die einen Speicherzeiger umfassen, der auf die Endadresse einer jeweiligen zweiten Dateneinheit zeigt;
- Speichern (S13) der zweiten Dateneinheiten in dem Speicherpuffer (14') derart, dass:

-- eine Startadresse der jeweiligen zweiten Dateneinheit gemäß den Verwaltungsdaten mit einer Startadresse einer weiteren zweiten Dateneinheit verlinkt ist, die in dem Speicherpuffer (14') gespeichert ist und die unmittelbar der jeweiligen zweiten Dateneinheit nachfolgt, und
-- der Speicherzeiger der jeweiligen zweiten Dateneinheit (22, 24) als ein Zeiger interpretierbar ist, der auf die Startadresse der unmittelbar nachfolgenden zweiten Dateneinheit (25) zeigt, da die Endadresse der jeweiligen zweiten Dateneinheit (22, 24) der Startadresse der weiteren zweiten Dateneinheit (25) entspricht, die unmittelbar nach der jeweiligen zweiten Dateneinheit gespeichert ist.

2. Verfahren gemäß Anspruch 1, wobei der Empfänger ein Funkempfänger (12') ist und wobei die ersten Dateneinheiten Funksendungsprotokolldateneinheiten sind.

3. Verfahren gemäß Anspruch 1 oder 2, wobei in dem Fall, in dem das Speichern der zweiten Dateneinheit zu einer Situation führen würde, in der eine Endadresse der zweiten Dateneinheit eine Speicherpufferendadresse überschreiten würde, die zweite Dateneinheit derart in dem Speicherpuffer gespeichert wird, dass die Startadresse der zweiten Dateneinheit mit einer Speicherpufferstartadresse zusammenfällt oder größer als diese ist.

4. Verfahren gemäß Anspruch 3, wobei der Speicherpuffer (14') einen kohärenten Speicherbereich umfasst, und wobei die Speicherpufferstartadresse der Startadresse des kohärenten Speicherbereichs (21) entspricht, und die Speicherpufferendadresse der Endadresse des kohärenten Speicherbereichs (21) entspricht.

5. Verfahren gemäß einem der Ansprüche 1 bis 4,
wobei die ersten Dateneinheiten jeweils einen Header-Abschnitt umfassen, der Steuerinformationen umfasst, die zum Steuern der Übermittlung der ersten Dateneinheiten von einem Sender zu dem Empfänger (12') verwendet werden, wobei die Umwandlung der ersten Dateneinheiten in zweite Dateneinheiten derart ausgeführt wird, dass die zweiten Dateneinheiten die Steuerinformationen nicht enthalten.

6. Verfahren gemäß einem der Ansprüche 1 bis 5, weiterhin umfassend Übergeben, sobald eine Startadresse für eine zweite Dateneinheit in dem Speicherpuffer (14') allokiert wurde, eines Werts des Speicherzeigers, der auf die Startadresse der zweiten Dateneinheit zeigt, an eine Anwendung, die Daten der zweiten Dateneinheit verarbeitet.

7. Verfahren gemäß einem der Ansprüche 1 bis 6, weiterhin umfassend Setzen, sobald eine Anwendung das Verarbeiten von Daten einer zweiten Dateneinheit beendete, die in dem Speicherpuffer (14') gespeichert ist, einer Variablen, die ein Teil der Verwaltungsdaten des Header-Abschnitts der zweiten Dateneinheit ist, auf einen Wert, der angibt, dass die zweite Dateneinheit überschrieben werden kann.

8. Verfahren gemäß einem der Ansprüche 1 bis 7,
wobei eine zweite Dateneinheit lediglich innerhalb des Speicherpuffers (14') gespeichert wird, falls die zweite Dateneinheit als eine kontinuierliche Dateneinheit in dem Speicherpuffer (14') gespeichert werden kann.

9. Verfahren gemäß einem der Ansprüche 1 bis 8,
wobei eine oder mehrere der folgenden Variablen zum Allokieren und zum Deallokieren von Speicherressourcen des Speicherpuffers (14') für eine zweite Dateneinheit verwendet wird oder werden: ein Zeiger MemBegin, der eine Startadresse des Speicherpuffers angibt, eine Variable MemSize, die eine Größe des Speicherpuffers angibt, ein Zeiger LastAlloc, der eine Speicherstartadresse der zweiten Dateneinheit angibt, die zuletzt gespeichert wurde, ein Zeiger NextToAlloc, der eine Endadresse der zweiten Dateneinheit angibt, die zuletzt gespeichert wurde, und ein Zeiger NextToFree, der eine Startadresse einer ältesten noch immer gespeicherten zweiten Dateneinheit angibt.

10. Verfahren gemäß einem der Ansprüche 1 bis 9,
wobei die zweiten Dateneinheiten jeweils eine Variable Freed umfassen, die angibt, ob die zweite Dateneinheit in dem Speicherpuffer (14') überschrieben werden kann oder nicht.

11. Verfahren gemäß einem der Ansprüche 9 und 10,
wobei, um zu bestimmen, ob das Speichern der zweiten Dateneinheit zu einer Situation führen würde, in der die Speicherendadresse der zweiten Dateneinheit die Speicherendadresse des Speicherpuffers (14') überschreiten würde, bestimmt wird, ob eine Summe der Werte der Zeiger MemBegin und MemSize größer oder gleich einer Summe der Werte des Zeiger NextToAlloc und einer Größe des Header-Abschnitts der zweiten Dateneinheit und einer Größe des Benutzerdatenabschnitts der zweiten Dateneinheit ist.

12. Verfahren gemäß einem der Ansprüche 9 bis 11,
wobei, falls bestimmt wird, dass das Speichern der zweiten Dateneinheit zu einer Situation führen würde, in der die Endadresse der zweiten Dateneinheit die Speicherendadresse des Speicherpuffers (14') überschreiten würde, die nachfolgenden Prozesse ausgeführt werden:

- Bestimmen, ob eine Relation erfüllt ist: eine Differenz zwischen den Werten der Zeiger NextToFree und MemBegin ist größer oder gleich einer Summe der Größe des Header-Abschnitts der zweiten Dateneinheit und der Größe des Benutzerdatenabschnitts der zweiten Dateneinheit,
- lediglich falls die Relation erfüllt ist, Speichern der zweiten Dateneinheit in dem Speicherpuffer derart, dass die Speicherstartadresse der zweiten Dateneinheit mit einer Startadresse des Speicherpuffers (14') zusammenfällt oder größer als diese ist.

13. Verfahren gemäß einem der Ansprüche 9 bis 12,
wobei Speicherressourcen des Speicherpuffers (14'), die durch gespeicherte zweite Dateneinheiten allokiert sind, unter Verwendung der nachfolgenden Prozesse deallokiert werden:

1) Bestimmen, ob a) der Wert des Zeigers NextToFree nicht gleich dem Wert des Zeigers NextToAlloc ist, und ob b) eine zweite Dateneinheit, deren Startadresse dem Wert des Zeigers NextToFree entspricht, in ihrem Header einen Wert für die Variable Freed speichert, der angibt, dass die zweite Dateneinheit gelöscht werden kann;
2) in dem Fall, dass beide Relationen a) und b) erfüllt sind, Setzen des Werts des Zeigers NextToFree auf einen Wert des Speicherzeigers (Next) des Header-Abschnitts der zweiten Dateneinheit; und
3) Wiederholen der Prozesse 1) und 2), bis zumindest eine der Relationen a) und b) nicht erfüllt ist.

14. Verfahren gemäß einem der Ansprüche 9 bis 13,
wobei die Werte der Variablen MemBegin und MemSize lediglich einmal während einer Initialisierung des Speicherpuffers (14') gesetzt werden.

15. Verfahren gemäß einem der Ansprüche 1 bis 14,
wobei die ersten Dateneinheiten, die durch den Funkempfänger empfangen werden, Downlink-Radio Link Control-Dateneinheiten sind.

16. Computerprogrammprodukt, das Programmcodeabschnitte umfasst, die zum Ausführen jedweder Komponente oder jedwedes Verfahrensschritts gemäß den Ansprüchen 1 bis 15 dienen, wenn das Computerprogrammprodukt auf einer oder mehreren Computervorrichtungen ausgeführt wird.

17. Computerlesbares Aufzeichnungsmedium, das ein Computerprogrammprodukt gemäß Anspruch 16 speichert.

18. Speichervorrichtung (13') für einen Empfänger (12'), umfassend:

   - einen Speicherpuffer (14');
   - eine Empfangseinheit (15'), die mit dem Speicherpuffer (14') verbunden ist und konfiguriert ist, um erste Dateneinheiten variierender Größe an dem Empfänger zu empfangen, wobei die ersten Dateneinheiten jeweils einen Benutzerdatenabschnitt umfassen, der Benutzerdaten enthält;
   - eine Steuereinheit (16'), die mit dem Speicherpuffer (14') und der Empfangseinheit (15') verbunden ist und konfiguriert ist, um zu steuern:

      -- einen Umwandlungsprozess, der die ersten Dateneinheiten in zweite Dateneinheiten (22, 24) umwandelt, wobei die zweiten Dateneinheiten jeweils einen Benutzerdatenabschnitt, der die Benutzerdaten der entsprechenden ersten Dateneinheiten enthält, und einen Header-Abschnitt (25) umfassen, der Verwaltungsdaten enthält, die einen Speicherzeiger umfassen, der auf eine Endadresse einer jeweiligen zweiten Dateneinheit zeigt, und
      -- einen Speicherprozess, der konfiguriert ist, um die zweiten Dateneinheiten in dem Speicherpuffer (14') derart zu speichern, dass:

         --- eine Startadresse der jeweiligen zweiten Dateneinheit gemäß den Verwaltungsdaten mit einer Startadresse einer weiteren zweiten Dateneinheit verlinkt ist, die in dem Speicherpuffer (14') gespeichert ist und der jeweiligen zweiten Dateneinheit unmittelbar nachfolgt, und
         --- der Speicherzeiger der jeweiligen zweiten Dateneinheit (22, 24) als ein Zeiger interpretierbar ist, der auf die Startadresse der unmittelbar nachfolgenden zweiten Dateneinheit (25) zeigt, da die Endadresse der jeweiligen zweiten Dateneinheit (22, 24) einer Startadresse der weiteren zweiten Dateneinheit (25) entspricht, die unmittelbar nach der jeweiligen zweiten Dateneinheit gespeichert ist.

19. Funkempfänger (12'), der eine Speichervorrichtung (13') gemäß Anspruch 18 umfasst.

**Revendications**

1. Procédé de gestion de ressources mémoire d'un tampon mémoire (14') d'un récepteur (12'), le procédé comprenant :

   - la réception (S1) de premières unités de données de taille variable au niveau du récepteur (12'), les premières unités de données comprenant une section de données d'utilisateur incluant des données d'utilisateur ;
   - la conversion (S2) des premières unités de données en deuxièmes unités de données, dans lequel les deuxièmes unités de données (22, 24) comprennent respectivement une section de données d'utilisateur incluant les données d'utilisateur des premières unités de données correspondantes, et une section d'en-tête (25) incluant des données de gestion comprenant un pointeur de mémoire pointant sur l'adresse de fin d'une deuxième unité de données respective ;
   - le stockage (S3) des deuxièmes unités de données dans le tampon mémoire (14') de telle manière que :

      - - une adresse de début de la deuxième unité de données respective est liée, conformément aux données de gestion, à une adresse de début d'une autre deuxième unité de données stockée dans le tampon mémoire (14') qui suit immédiatement la deuxième unité de données respective, et
      - - le pointeur de mémoire de la deuxième unité de données respective (22, 24) est interprétable comme un pointeur pointant sur l'adresse de début de la deuxième unité de données (25) suivant immédiatement, puisque l'adresse de fin de la deuxième unité de données respective (22, 24) correspond à une adresse de début de l'autre deuxième unité de données (25) qui est immédiatement stockée après la deuxième unité de données respective.

2. Procédé selon la revendication 1, dans lequel le récepteur est un récepteur radio (12'), et dans lequel les premières unités de données sont des unités de données de protocole de transmission radio.

3. Procédé selon la revendication 1 ou 2, dans lequel, dans le cas où le stockage d'une deuxième unité de données résulterait en une situation où une adresse de fin de la deuxième unité de données excéderait une adresse de fin de tampon mémoire, la deuxième unité de données est stockée de telle manière dans le tampon mémoire que l'adresse de début de la deuxième unité de données coïncide avec ou est supérieure à une adresse de début de tampon mémoire.

4. Procédé selon la revendication 3, dans lequel le tampon mémoire (14') comprend une zone de mémoire cohérente, et dans lequel l'adresse de début de tampon mémoire correspond à l'adresse de début de la zone de mémoire cohérente (21), et l'adresse de fin de tampon mémoire correspond à l'adresse de fin de la zone de mémoire cohérente (21).

5. Procédé selon l'une quelconque des revendications 1 à 4,
dans lequel les premières unités de données comprennent respectivement une section d'en-tête comprenant des informations de contrôle utilisées pour contrôler le transfert des premières unités de données d'un émetteur jusqu'au récepteur (12'), dans lequel la conversion des premières unités de données en deuxièmes unités de données est exécutée de telle manière que les deuxièmes unités de données n'incluent pas les informations de contrôle.

6. Procédé selon l'une quelconque des revendications 1 à 5,
comprenant en outre le passage, dès qu'une adresse de début a été attribuée pour une deuxième unité de données dans le tampon mémoire (14'), d'une valeur du pointeur de mémoire pointant sur l'adresse de début de la deuxième unité de données à une application qui traite des données de la deuxième unité de données.

7. Procédé selon l'une quelconque des revendications 1 à 6,
comprenant en outre le réglage, dès qu'une application a terminé le traitement de données d'une deuxième unité de données stockée dans le tampon mémoire (14'), d'une variable faisant partie des données de gestion de la section d'en-tête de la deuxième unité de données à une valeur indiquant que la deuxième unité de données peut être écrasée.

8. Procédé selon l'une quelconque des revendications 1 à 7,
dans lequel une deuxième unité de données n'est stockée au sein du tampon mémoire (14') que si la deuxième unité de données peut être stockée comme une unité de données continue dans le tampon mémoire (14').

9. Procédé selon l'une quelconque des revendications 1 à 8,
dans lequel une ou plusieurs parmi les variables suivantes sont utilisées pour attribuer et désattribuer des ressources mémoire du tampon mémoire (14') pour une deuxième unité de données : un pointeur MemBegin indiquant une adresse de début du tampon mémoire, une variable MemSize indiquant une taille du tampon mémoire, un pointeur LastAlloc indiquant une adresse de début de mémoire de la deuxième unité de données stockée en dernier, un pointeur NextToAlloc indiquant une adresse de fin de la deuxième unité de données stockée en dernier, et un pointeur NextToFree indiquant une adresse de début d'une deuxième unité de données la plus ancienne toujours stockée.

10. Procédé selon l'une quelconque des revendications 1 à 9,
dans lequel les deuxièmes unités de données comprennent respectivement une variable Freed indiquant si la deuxième unité de données peut être écrasée dans le tampon mémoire (14') ou non.

11. Procédé selon l'une quelconque des revendications 9 et 10,
dans lequel, afin de déterminer si le stockage de la deuxième unité de données résulterait en une situation où l'adresse de fin de mémoire de la deuxième unité de données excéderait l'adresse de fin de mémoire du tampon mémoire (14'), il est déterminé si une somme des valeurs des pointeurs MemBegin et MemSize est égale ou supérieure à une somme des valeurs du pointeur NextToAlloc et d'une taille de la section d'en-tête de la deuxième unité de données et d'une taille de la section de données d'utilisateur de la deuxième unité de données.

**12.** Procédé selon l'une quelconque des revendications 9 à 11,
dans lequel, s'il est déterminé que le stockage de la deuxième unité de données résulterait en une situation où l'adresse de fin de la deuxième unité de données excéderait l'adresse de fin de mémoire du tampon mémoire (14'), les processus suivants sont exécutés :

- détermination si une relation : une différence entre les valeurs des pointeurs NextToFree et MemBegin est égale ou supérieure à une somme de la taille de la section d'en-tête de la deuxième unité de données et de la taille de la section de données d'utilisateur de la deuxième unité de données est satisfaite,
- uniquement si la relation est satisfaite, stockage de la deuxième unité de données dans le tampon mémoire de telle manière que l'adresse de début de mémoire de la deuxième unité de données coïncide avec ou est supérieure à une adresse de début du tampon mémoire (14').

**13.** Procédé selon l'une quelconque des revendications 9 à 12,
dans lequel des ressources mémoire du tampon mémoire (14') attribuées par des deuxièmes unités de données stockées sont désattribuées en utilisant les processus suivants :

1) détermination si a) la valeur du pointeur NextToFree n'est pas égale à la valeur du pointeur NextToAlloc, et si b) une deuxième unité de données, dont l'adresse de début correspond à la valeur du pointeur NextToFree, stocke dans son en-tête une valeur pour la variable Freed indiquant que la deuxième unité de données peut être effacée ;
2) dans le cas où les deux relations a) et b) sont satisfaites, réglage de la valeur du pointeur NextToFree à une valeur du pointeur de mémoire (Next) de la section d'en-tête de la deuxième unité de données ; et
3) répétition des processus 1) et 2) jusqu'à ce qu'au moins une des relations a) et b) ne soit pas satisfaite.

**14.** Procédé selon l'une quelconque des revendications 9 à 13,
dans lequel les valeurs des variables MemBegin et MemSize ne sont réglées qu'une seule fois lors d'une initialisation du tampon mémoire (14').

**15.** Procédé selon l'une quelconque des revendications 1 à 14,
dans lequel les premières unités de données reçues par le récepteur radio sont des unités de données de contrôle de liaison radio en liaison descendante.

**16.** Produit de programme informatique comprenant des parties de code de programme pour mettre en oeuvre une quelconque étape de composant ou de procédé selon les revendications 1 à 15 lorsque le produit de programme informatique est exécuté sur un ou plusieurs dispositifs informatiques.

**17.** Support d'enregistrement lisible par ordinateur stockant un produit de programme informatique selon la revendication 16.

**18.** Dispositif de mémoire (13') pour un récepteur (12'), comprenant :

- un tampon mémoire (14') ;
- une unité de réception (15') connectée au tampon mémoire (14') et configurée pour recevoir des premières unités de données de taille variable au niveau du récepteur, les premières unités de données comprenant respectivement une section de données d'utilisateur incluant des données d'utilisateur ;
- une unité de contrôle (16') connectée au tampon mémoire (14') et à l'unité de réception (15') et configurée pour contrôler :

- - un processus de conversion qui convertit les premières unités de données en deuxièmes unités de données (22, 24), dans lequel les deuxièmes unités de données comprennent respectivement une section de données d'utilisateur incluant les données d'utilisateur des premières unités de données correspandantes, et une section d'en-tête (25) incluant des données de gestion comprenant un pointeur de mémoire pointant sur l'adresse de fin d'une deuxième unité de données respective, et
- - un processus de stockage configuré pour stocker les deuxièmes unités de données dans le tampon mémoire (14') de telle manière que :

--- une adresse de début de la deuxième unité de données respective est liée, conformément aux données de gestion, à une adresse de début d'une autre deuxième unité de données stockée dans le tampon mémoire (14') qui suit immédiatement la deuxième unité de données respective, et
--- le pointeur de mémoire de la deuxième unité de données respective (22, 24) est interprétable comme un pointeur pointant sur l'adresse de début de la deuxième unité de données (25) suivant immédiatement, puisque l'adresse de fin de la deuxième unité de données respective (22, 24) correspond à une adresse de début de l'autre deuxième unité de données (25) qui est immédiatement stockée après la deuxième unité de données respective.

**19.** Récepteur radio (12') comprenant un dispositif de mémoire (13') selon la revendication 18.

Fig. 1

Fig. 2

Figure 2: Paylod pool with Fixed Payload Size per RLC PDU - preallocated max size Z

RB:1 Size X, SN:100 — Not used
RB:1 Size X, SN:101 — Not used
RB:1 Size Y, SN:102 — Not used
RB:2 Size Y, SN:200 — Not used
RB:2 Size X, SN:201 — Not used
RB:1 Size Z — Not used
RB:2 Size X, SN:202 — Not used
RB:3 Size Y, SN:300 — Not used

17  20  19  14  18  21

EP 2 611 093 B1

Fig. 3

13'

16'

15'

14'

Fig. 4

S1 — Receiving first data units of varying size at the receiver, the first data units comprising a user data section including user data

S2 — Converting the first data units into second data units, wherein the second data units respectively comprise a user data section including the user data of the corresponding first data units, and a header section including management data

S3 — Storing the second data units in the memory buffer such that a start address of a second data unit is linked, in accordance with the management data, to an end address of a further second data unit stored in the memory buffer which precedes the second data unit

Fig. 5

Fig. 6

**EP 2 611 093 B1**

**Patent documents cited in the description**

- EP 1892922 A2

- EP 0272384 A2